# FASCICULE DE BREVET EUROPEEN

(11) **EP 0 402 257 B1**
(45) Date de publication et mention de la délivrance du brevet: **03.01.1996**
(21) Numéro de dépôt: 90401550.0
(22) Date de dépôt: 07.06.1990
(51) Int. Cl.: A47J 37/08

(54) **Grille-pain à plusieurs fonctions**
Brotröster mit mehreren Funktionen
Multi-function bread toaster

(30) Priorité: 09.06.1989 FR 8907657
(43) Date de publication de la demande: 12.12.1990
(73) Titulaire: SEB S.A., F-21260 Selongey (FR)
(72) Inventeur: Eisenberg, Roger, F-57157 Marly (FR)
(74) Mandataire: Michelet, Alain

(56) Documents cités:
- AU-B- 573 097
- FR-A- 2 340 582
- GB-A- 636 330
- GB-A- 639 393
- US-A- 3 585 363

## Description

La présente invention concerne un grille-pain perfectionné.

Les grille-pains connus comprennent un logement de réception des morceaux de pain à griller ou réchauffer et de part et d'autre de ce logement un élément chauffant constitué par un barreau ou tube en matière thermiquement isolante telle que la stéatite autour duquel est enroulé hélicoïdalement une résistance électrique.

Ces éléments chauffants émettent vers les morceaux de pain logés dans l'appareil, un rayonnement infra-rouge chargé de colorer ou de griller leur surface.

Le résultat obtenu sur les morceaux de pain, est fonction, pour une surface source de rayonnement infra-rouge et pain donnée, de la puissance de la source et du temps d'exposition.

De ce fait, une source puissante colorera la surface du pain dans des temps très courts avec peu d'évaporation d'eau (pains grillés moelleux). Au contraire, une source de faible puissance colorera la surface du pain dans des temps longs avec beaucoup d'évaporation d'eau (pains grillés secs ou biscottes).

L'appareil disposant d une échelle de temps définie, devant être la même quel que soit le mode de fonctionnement l'invention se propose d'adapter les puissances d'émission du rayonnement calorifique suivant les besoins de l'utilisateur par commutation d'éléments résistifs chauffants additionnels.

Les morceaux de pain se présentent sous la forme de tranches de pain, de morceaux de baguettes, de pains coupés dans le sens de leur longueur ou de morceaux de pain de diverses formes préalablement tranchés.

Les grille-pains connus sont conçus essentiellement pour griller les tranches ou morceaux de baguette de pain.

Ce grillage se traduit par une coloration brune des faces des tranches ou morceaux de pain en regard du rayonnement émis par les deux éléments chauffants.

Le document GB-A-636.330 décrit un grille-pain comportant, de part et d'autre des logements de réception des morceaux de pain, des éléments chauffants constitués de plusieurs résistances électriques. Afin d'assurer l'uniformité du grillage, divers modes d'alimentation symétriques de ces résistances sont proposés.

Les utilisateurs sont souvent obligés de décongeler ou de réchauffer des morceaux de pain, sans que cela ne se traduise par une coloration superficielle de ces morceaux.

Les grille-pains connus ne permettent pas d'obtenir ce résultat. En effet, dans le cas de la décongélation des morceaux de pain, un brunissement accentué de leur surface apparaît avant que leur coeur soit décongelé.

Par ailleurs, dans le cas de morceaux de baguettes de pain, l'une des faces de ceux-ci comporte déjà une croûte grillée et il est par conséquent souhaitable de griller seulement l'autre face dépourvue de croûte sans trop accentuer le brunissement de celle-ci.

Le but de la présente invention est de perfectionner les grille-pains connus, de façon à conférer à ceux-ci plusieurs régimes de chauffage permettant d'obtenir les résultats précités.

Le grille-pain visé par l'invention comprend un logement de réception des morceaux de pain à griller ou à réchauffer, deux éléments chauffants situés respectivement de part et d'autre de ce logement et comportant chacun une première et une deuxième résistances électriques et, des moyens de commutation prévus pour relier au secteur les résistances précitées de façon à commander des régimes de chauffage, soit à la puissance maximale de part et d'autre du logement, soit à une puissance modérée de chaque côté du logement.

Suivant l'invention, ce grille-pain est caractérisé en ce que lesdits moyens de commutation permettent aussi de commander un mode de chauffage asymétrique, dans lequel le chauffage est à la puissance maximale d'un côté du logement et à une puissance modérée ou nulle de l'autre côté du logement, les deux deuxièmes résistances étant reliées en série avec les deux premières résistances et étant comprises entre celles-ci, le commutateur ayant l'une de ses bornes connectée à la jonction électrique entre l'une des premières résistances électriques et l'une des deuxièmes résistances, l'autre borne de ce commutateur pouvant être raccordée au choix de l'utilisateur :
- soit à la jonction entre l'autre première résistance et l'autre deuxième résistance,
- soit à l'extrémité de la première résistance opposée à la première borne du commutateur,
- soit à une position qui n'est raccordée avec aucune des résistances,
   de façon à commander au choix trois régimes de chauffage.

L'utilisateur peut ainsi modifier la puissance de chauffage et/ou la répartition du chauffage sur les morceaux de pain de façon à obtenir, soit un grillage normal, soit une décongélation ou réchauffage ou un grillage différent sur les faces opposées des morceaux de pain.

Selon une version avantageuse de l'invention, chaque première résistance est enroulée sur un support allongé en matière isolante portant également les secondes résistances électriques.

De préférence, les supports isolants sont constitués chacun par un tube en matière isolante telle que la stéatite, la première résistance étant enroulée hélicoïdalement autour de ce tube.

Selon une version préférée de l'invention, la seconde résistance s'étend hélicoïdalement à l'intérieur du tube en matière isolante.

Cette disposition de la seconde résistance à l'intérieur du tube qui porte déjà à l'extérieur la première résistance, est plus économique que la solution qui consiste à utiliser un autre support isolant pour la seconde résistance.

De plus, du fait que la seconde résistance est incorporée dans le tube isolant, le chauffage engendré par cette seconde résistance ne produit pas de brunissement superficiel des morceaux de pain, dans la limite des temps définie, ce qui permet la décongélation et le réchauffage de ceux-ci.

Selon une réalisation préférée de l'invention, la seconde résistance a une valeur ohmique sensiblement égale à la moitié de celle de la première résistance.

D'autres particularités et avantages de l'invention apparaîtront encore dans la description ci-après.

Aux dessins annexés donnés à titre d'exemples non limitatifs :
- la figure 1 est une vue en perpective éclatée d'un grille-pain ;
- la figure 2 est une vue en perspective des deux tubes chauffants du grille-pain selon l'invention,
- la figure 3 est une vue en coupe schématique partielle d'un grille-pain selon l'invention montrant les deux tubes chauffants de part et d'autre d'une tranche de pain,
- la figure 4 est une vue du schéma électrique de connexion des différentes résistances chauffantes.

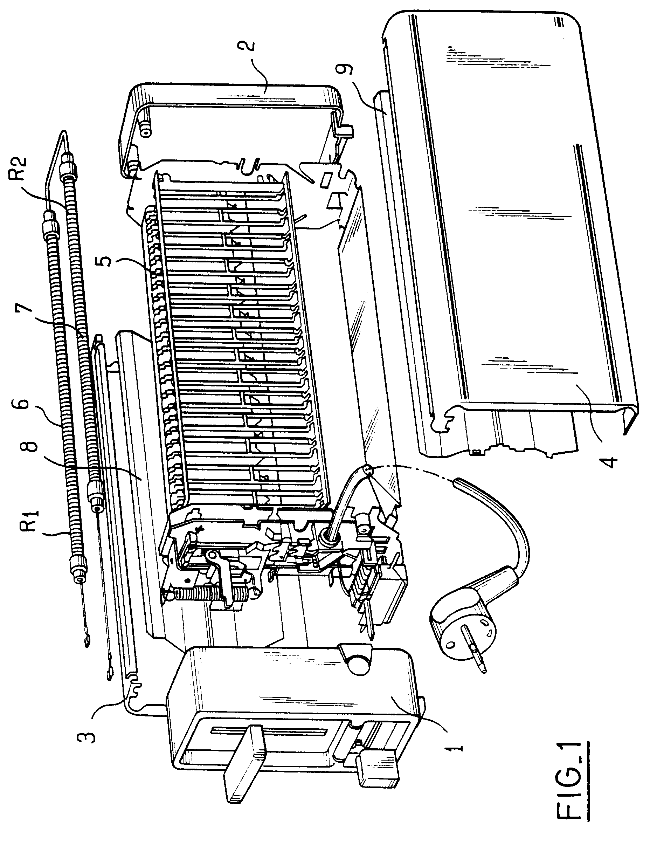

La figure 1 représente un grille-pain connu. Celui-ci comporte à l'intérieur d'un boîtier parallélépipédique à quatre faces latérales 1, 2, 3, 4, un panier 5 pour supporter des morceaux de pain entre deux tubes chauffants 6, 7 disposés de part et d'autre du panier 5 sensiblement à mi-hauteur des faces latérales 3, 4.

Les tubes chauffants 6, 7 comprennent chacun un tube isolant par exemple en stéatite sur lequel est enroulé hélicoïdalement un fil chauffant résistif R₁, R₂, par exemple en nickel-chrome. Les deux fils résistifs R₁, R₂ sont connectés en série.

Entre les tubes chauffants 6, 7 et les faces latérales 3, 4 sont disposés des réflecteurs 8, 9 qui renvoient vers les morceaux de pain disposés dans le panier 5 le rayonnement infra-rouge émis par les résistances R₁ et R₂.

Conformément à l'invention, de part et d'autre du iogement constitué par le panier 5 est prévu au moins une seconde résistance électrique, des moyens de commutation étant prévus pour relier au secteur au choix l'une et/ou l'autre des deux résistances précitées.

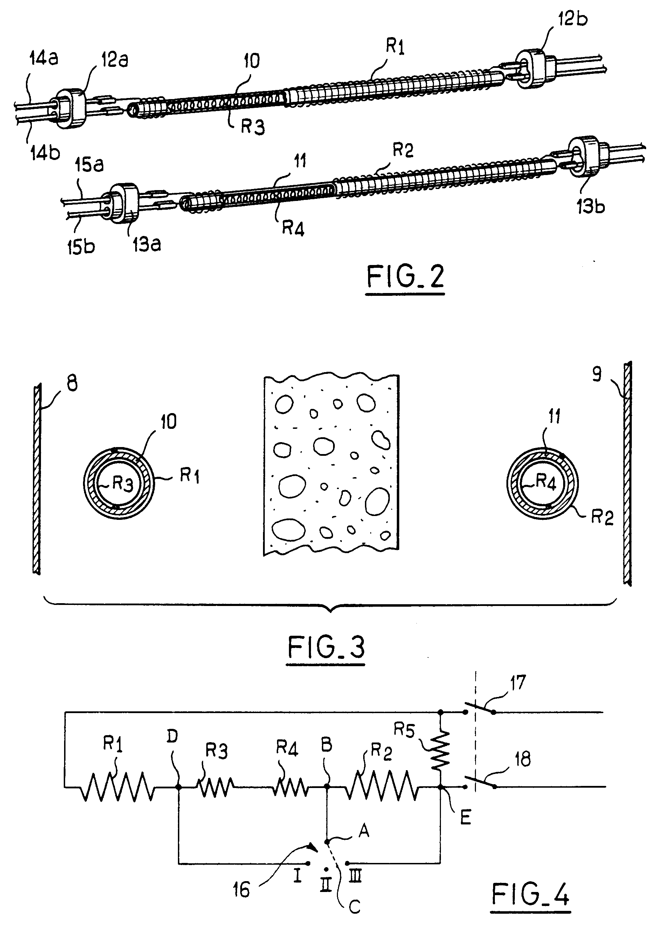

Dans la réalisation préférée représentée sur les figures 2 et 3, chaque tube isolant 10, 11 porte également l'une desdites secondes résistances électriques R₃, R₄, ces dernières étant enroulées hélicoïdalement à l'intérieur de chaque tube 10, 11.

Chaque extrémité des tubes isolants 10, 11 reçoit un embout de connexion 12a, 12b ; 13a, 13b portant chacun deux fils conducteurs 14a, 14b ; 15a, 15b reliés respectivement aux résistances extérieures R₁, R₂ et intérieures R₃, R₄.

Les résistances intérieures R₃, R₄ peuvent par exemple avoir une valeur ohmique sensiblement égale à la moitié de celle des résistances extérieures R₁, R₂.

La figure 4 montre le schéma électrique de connexion des résistances R₁, R₂, R₃, R₄. Sur ce schéma le commutateur 16 est adapté pour commander au choix les deux régimes de chauffage suivants :
- chauffage normal assuré par les deux premières résistances R₁, R₂ enroulées sur le tube isolant 10, 11, les deux résistances intérieures R₃, R₄ étant hors-circuit;
- chauffage assuré par les deux premières résistances R₁, R₂ enroulées sur le tube isolant 10, 11 et les deux résistances intérieures R₃, R₄.

Par ailleurs, le commutateur 16 est en outre adapté pour commander le troisième régime de chauffage suivant :
- chauffage assuré par l'une R₁ des résistances enroulées sur le tube 10, 11 et par les deux résistances intérieures R₃, R₄.

Sur le schéma de la figure 4, on voit en outre que les deux résistances intérieures R₃, R₄ sont reliées en série avec les deux résistances R₁, R₂ enroulées sur l'extérieur du tube 10, 11 et sont comprises entre celles-ci. Le commutateur 16 a l'une A de ses bornes connectée à la jonction électrique B entre l'une R₂ des résistances extérieures et l'une R₄ des résistances intérieures. L'autre borne C de ce commutateur 16 peut être raccordée au choix de l'utilisateur :
- soit à la jonction D entre l'autre résistance extérieure R₁ et l'autre résistance intérieure R₃ (position I),
- soit à l'extrémité E de la première résistance extérieure R₂ opposée à la première borne A du commutateur 16 (position III),
- soit à une position II qui n'est raccordée avec aucune des résistances R₁, R₂, R₃, R₄.

Sur le schéma de la figure 4, la résistance R₅ connectée en E représente la résistance du bilame qui détermine la durée du chauffage et qui commande la montée du panier 5, lorsque la durée de chauffage est atteinte.

Les références 17, 18 désignent un interrupteur bipolaire qui coupe l'alimentation électrique du chauffage des résistances R₁, ... R₄ lorsque la durée de chauffage précitée est atteinte.

Dans la position I du commutateur 16, les résistances intérieures R₃ et R₄ sont shuntées ; seules les résistances R₁ et R₂ chauffent et émettent un rayonnement calorifique vers les morceaux de pain. Cette position I correspond au fonctionnement normal d'un grille-pain classique : les morceaux de pain sont grillés de la même façon sur leurs deux faces.

Dans la position II, le commutateur 16 n'assure aucune liaison électrique.

Le courant alimente les résistances R₁, R₂, R₃, R₄ en série.

Par rapport à la position I, la puissance de chauffage des résistances R₁ et R₂ diminue, de même que la température de la surface des morceaux de pain, pour une base de temps identique. Cette température est par exemple d'environ 700°C au lieu de 900°C en position I. Ainsi, les morceaux de pain sont moins grillés en surface.

Cette position II convient donc pour décongeler ou réchauffer des morceaux de pain sans les brunir en surface.

Dans la position III, la résistance extérieure R₂ est shuntée. Les résistances R₃ et R₄ en série avec la résistance R₁ présentent sensiblement la même valeur ohmique que les résistances R₁ et R₂ dans la position I. La résistance extérieure R₁ émet un rayonnement infra-rouge vers les morceaux de pain.

Il en résulte que seule la face des morceaux de pain en regard de la résistance R₁ grille et brunit, tandis que l'autre face en regard de la résistance R₂ non alimentée en courant, se réchauffe, sans brunir grâce au chauffage de la résistance R₄ incluse dans le tube 11.

Cette position III convient parfaitement aux morceaux de baguettes de pain qui comportent une croûte sur l'une de leurs faces.

Dans les trois modes de fonctionnement, le temps utile de l'obtention du résultat désiré, n'excède pas les possibilités du système de temporisation de l'appareil. La résistance de chaufferette R₅ assurant l'automatisme étant connectée directement sur le réseau, n'est pas affectée par les divers commutations, ce qui permet le fonctionnement en toute sécurité.

Bien évidemment, le nombre de tubes en stéatite, de multiples valeurs ohmiques, et de nombreuses commutations peuvent se combiner pour des usages bien spécifiques sans sortir du cadre de l'invention.

Ainsi les résistances R₃ et R₄ pourraient être enroulées sur des tubes ou supports isolants distincts de ceux sur lesquels sont enroulées les résistances R₁ et R₂. Dans ce cas, des masques pourraient être prévus pour limiter le rayonnement infra-rouge émis par les résistances R₃ et R₄.

Les résistances R₃ et R₄ pourraient également être enroulées sur les tubes isolants portant déjà les résistances R₁ et R₂.

Il est bien évident que les tubes ci-dessus peuvent être remplacés par tout élément chauffant connu, tel que plaque en micanite ou autre isolant sur lequel les résistances sont fixées ou dans lequel celles-ci sont incluses. Ces résistances peuvent être constituées par des fils tendus entre supports isolants, par des résistances blindées comprenant plusieurs conducteurs résistifs ou autre dispositif chauffant permettant les commutations ci-dessus.

## Revendications

1. Grille-pain comprenant un logement (5) de réception des morceaux de pain à griller ou à réchauffer, deux éléments chauffants situés respectivement de part et d'autre de ce logement et comportant chacun une première et une deuxième résistances électriques (R1, R2, R3, R4) et, des moyens de commutation (16) prévus pour relier au secteur les résistances précitées de façon à commander des régimes de chauffage, soit à la puissance maximale de part et d'autre du logement, soit à une puissance modérée de chaque côté du logement,
caractérisé en ce que lesdits moyens de commutation (16) permettent aussi de commander un mode de chauffage asymétrique, dans lequel le chauffage est à la puissance maximale d'un côté du logement et à une puissance modérée ou nulle de l'autre côté du logement, les deux deuxièmes résistances (R3, R4) étant reliées en série avec les deux premières résistances (R1, R2) et étant comprises entre celles-ci, le commutateur (16) ayant l'une de ses bornes connectée à la jonction électrique entre l'une (R2) des premières résistances électriques et l'une (R4) des deuxièmes résistances, l'autre borne de ce commutateur (16) pouvant être raccordée au choix de l'utilisateur :
- soit à la jonction entre l'autre première résistance (R1) et l'autre deuxième résistance (R3),
- soit à l'extrémité de la première résistance (R2) opposée à la première borne du commutateur (16),
- soit à une position qui n'est raccordée avec aucune des résistances (R1, R2, R3, R4),
de façon à commander au choix trois régimes de chauffage.

2. Grille-pain selon la revendication 1, caractérisé en ce que chaque première résistance électrique (R1, R2) est enroulée sur un support allongé en matière isolante (10, 11) portant également les secondes résistances électriques (R3, R4).

3. Grille-pain selon la revendication 2, caractérisé en ce que les supports électriquement isolants (10, 11) sont constitués chacun par un tube en matière isolante et la première résistance (R1, R2) étant enroulée hélicoïdalement autour de ce tube, la seconde résistance (R3, R4) étant située à l'intérieur du tube.

4. Grille-pain selon la revendication 3, caractérisé en ce que la seconde résistance (R3, R4) s'étend hélicoïdalement à l'intérieur du tube.

5. Grille-pain selon l'une des revendications 1 à 4, caractérisé en ce que la seconde résistance (R3, R4) a une valeur ohmique sensiblement égale à la moitié de celle de la première résistance (R1, R2).

## Claims

1. Toaster comprising a housing (5) for receiving pieces of bread to be toasted or to be reheated, two heating elements respectively located on both sides of this housing, each of them having a first and a second electric resistors (R1, R2, R3, R4), and switching means (16) for connecting to mains the aforesaid resistors so as to control heating modes, either at maximum power on both sides of the housing, or at a moderate power on each side of the housing,
characterized in that said switching means (16) also permit to control an asymmetrical heating mode, in which heating is at the maximum power on one side of the housing and is at a moderate power or is null on the other side of the housing, the two second resistors (R3, R4) being connected in series with the two first resistors (R1, R2) and being included between them, the switch (16) having one of its terminals connected to the electrical junction between one (R2) of the first electric resistors and one (R4) of the second resistors, the other terminal of this switch (16) being connectable, according to the user's choice:
- either to the junction between the other first resistor (R1) and the other second resistor (R3),
- or to the end of the first resistor (R2) remote from the first terminal of the switch (16);
- or to a position which is not connected to any of the resistors (R1, R2, R3, R4),
so as to selectively control three heating modes.

2. Toaster according to claim 1, characterized in that each of the first electric resistors (R1, R2) is wound on an elongated support made of insulating material (10, 11), which also carries the second electric resistors (R3, R4).

3. Toaster according to claim 2, characterized in that the electrically insulating supports (10, 11) each consist of a tube made of insulating material and the first resistor (R1, R2) being helically wound around this tube, the second resistor (R3, R4) being situated inside the tube.

4. Toaster according to claim 3, characterized in that the second resistor (R3, R4) extends helically inside the tube.

5. Toaster according to one of claims 1 to 4, characterized in that the second resistor (R3, R4) has an ohmic value which is substantially equal to half that of the first resistor (R1, R2).

## Patentansprüche

1. Brotröster mit einer Aufnahmestelle (5) für die zu röstenden oder aufzuwärmenden Brotstücke, zwei Heizelementen, die jeweils auf beiden Seiten dieser Stelle liegen und jedes einen ersten und einen zweiten elektrischen Widerstand (R1, R2, R3, R4) und Umschaltmittel(16) aufweisen, die vorgesehen sind, um die genannten Widerstände derart mit dem Versorgungsnetz zu verbinden, daß die Heizbereiche gesteuert werden, entweder bei maximaler Leistung auf beiden Seiten der Stelle oder bei schwacher Leistung auf jeder Seite der Stelle,
**dadurch gekennzeichnet,** daß die Umschaltmittel (16) auch die Steuerung einer asymmetrischen Heizweise erlauben, bei welcher die Heizung auf einer Seite der Stelle maximale Leistung hat und auf der anderen Seite der Stelle eine schwache oder keine Leistung hat, wobei die beiden zweiten Widerstände (R3, R4) in Serie mit den beiden ersten Widerständen (R1, R2) verbunden und zwischen diesen eingeschlossen sind, wobei eine der Anschlußklemmen des Umschalters (16) mit elektrischer Verbindung zwischen einem (R2) der ersten elektrischen Widerstände und einem (R4) der zweiten Widerstände verbunden ist, wobei die andere Anschlußklemme des Umschalters (16) nach Wahl des Benutzers verbunden werden kann:
- entweder mit Verbindung zwischen dem anderen ersten Widerstand (R1) und dem anderen zweiten Widerstand (R3),
- oder mit dem Ende des ersten Widerstandes (R2), welcher der ersten Anschlußklemme des Umschalters (16) gegenüberliegt,
- oder mit einer Position, die mit keinem der Widerstände (R1, R2, R3, R4) verbunden ist, derart, daß nach Wahl drei Heizbereiche gesteuert werden können.

2. Brotröster nach Anspruch 1, dadurch gekennzeichnet, daß jeder erste elektrische Widerstand (R1, R2) auf einer länglichen Stütze aus isolierendem Material (10, 11) aufgewickelt ist, die in gleicher Weise die zweiten elektrischen Widerstände (R3, R4) trägt.

3. Brotröster nach Anspruch 2, dadurch gekennzeichnet, daß die elektrisch isolierenden Stützen (10, 11) jeweils aus einem Rohr aus isolierendem Material bestehen und daß der erste Widerstand (R1, R2) spiralförmig um dieses Rohr gewickelt ist, wobei der zweite Widerstand (R3, R4) im Inneren des Rohres liegt.

4. Brotröster nach Anspruch 3, dadurch gekennzeichnet, daß sich der zweite Widerstand (R3, R4) spiralförmig im Inneren des Rohres erstreckt.

5. Brotröster nach einem der Ansprüche 1 bis 4, dadurch gekennzeichnet, daß der zweite Widerstand (R3, R4) einen Ohmwert hat, der im wesentlichen gleich der Hälfte dessen des ersten Widerstandes (R1, R2) ist.
